(19)

**Europäisches Patentamt**
**European Patent Office**
**Office européen des brevets**

(11) **EP 4 726 439 A1**

(12) **EUROPEAN PATENT APPLICATION**

(43) Date of publication:
**15.04.2026 Bulletin 2026/16**

(21) Application number: **25201020.2**

(22) Date of filing: **09.09.2025**

(51) International Patent Classification (IPC):
*G01W 1/10* (2006.01)

(52) Cooperative Patent Classification (CPC):
**G01W 1/10;** G01W 2203/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.10.2024 IT 202400022821**

(71) Applicant: **Hypermeteo S.r.l.**
**00184 Roma (IT)**

(72) Inventors:
• **CRESPI, Massimo**
  **00184 Roma (IT)**

• **FERRARI, Gianluca**
  **00184 Roma (IT)**
• **BOTTARO, Federico**
  **00184 Roma (IT)**
• **CHINI, Andrea**
  **00184 Roma (IT)**
• **DELL' ORCO, Francesco**
  **00184 Roma (IT)**

(74) Representative: **Anselmi, Davide**
**Bugnion S.p.A.**
**Via Pancaldo, 68**
**37138 Verona (IT)**

(54) **PROCESS FOR PRODUCING A DIGITAL COPY OF THE ATMOSPHERE RELATIVE TO A GIVEN GEOGRAPHIC DOMAIN**

(57)    A process for producing a digital copy of the atmosphere relative to a given geographic domain on different space-time scales comprises the steps of: receiving a first and a second dataset of weather measurements from a plurality of in-situ and remote weather stations associated with the geographic domain; generating a first dataset of territorial metadata of specific morphological information of the geographic domain at the spatial resolution of the atmospheric simulation model; generating a modelled weather dataset with the application of an atmospheric simulation model to the first and second datasets of weather measurements and to the first dataset of territorial metadata; generating a second dataset of territorial metadata of specific morphological information of the geographic domain at the final spatial resolution; generating a final weather dataset with the application of a statistical processing algorithm with an artificial neural network to the first and second datasets of weather measurements, to the second dataset of territorial metadata and to the modelled weather dataset. In detail, the final weather dataset is representative, for each processed time instant, of the numerical values of the weather variables of the points of the geographic domain and is represented on a regular grid, complete in time and space, with a spatial resolution that is greater than that of the modelled weather dataset.

Fig. 1

## Description

## Technical field

The present invention fits into the technical field of meteorology and climatology and is intended to be applied, preferably specifically and to a significant degree, in various economic and industrial contexts, such as the environmental, agricultural, insurance, banking, water and energy resource management, infrastructure and real estate sectors.

In particular, the invention relates to a process for producing a digital copy of the atmosphere relative to a given geographic domain on different space-time scales.

## Prior art

At present, above all due to climate change and its negative effects - not negligible - on the environment and on society, the demand for representative (i.e. the most precise and reliable possible) weather and climate data is constantly growing.

In particular, the absence of representative weather and climate datasets is complained of not only by the scientific community, particularly interested in such data for the study of weather phenomena and their evolution in time and space, but also by various political and financial bodies aiming to implement policies of mitigation and adaptation to climate changes and to be able to offer more dedicated and accurate services to the end user.

To date, at least in Italy, the lack of a national weather service makes it impossible, in fact, to produce a unique national weather and climate database bringing together official, certified data meeting the standards of the WMO (i.e. World Meteorological Organization) and useful for complying with and monitoring transition policies.

In addition to the absence of the aforesaid data, the misalignment between climate temporal horizons and economic ones makes it practically impossible to provide various precise, accurate services for users in different sectors such as insurance, banking, agriculture, infrastructure and real estate, or in the water resource management sector.

Representative weather and climate datasets are by now a component which, thanks also to the digital evolution, has acquired strategic relevance in industrial policies and in the development of new business models: verification of threshold-crossing parameters for atmospheric events that are the subject of insurance coverage; support to financial rating analysis; ex-post analysis and management of intense weather and climate events; and still more.

In an attempt to contain the previously mentioned problems, datasets of historical weather data have been produced with processes based substantially on the application of one of the possible mathematical simulation models, which, however, have demonstrated a poor qualitative performance and may thus be used at most in applications of a general character.

Document US2021223433 discloses a method for determining localised weather information in a high-resolution spatial grid, mainly for the purposes of agricultural applications.

In detail, the method illustrated in the aforementioned prior document presupposes the installation of an on-site weather station (i.e. in a specific point on a farm) with which to collect weather data that can be used to statistically correct the weather forecasts produced by means of a mathematical model.

In order to make this correction and apply it spatially with precision in an area of interest, the method of the aforementioned prior document envisages creating a very high-resolution grid (preferably in the order of metres) on which to apply metadata such as elevation, soil type, etc. This allows for producing detailed agronomic information, but with a series of drawbacks:

- the method is designed to work on forecast data and not on historical data, which limits the quality of the final information obtainable, as it is affected by the intrinsic error of weather forecasting;
- should one wish to reconstruct a historical dataset with the aforesaid method, it would have a very small temporal depth, substantially limited to the day of installation of the on-site weather station, as it is the only direct observational source available for processing;
- the data obtained from the on-site station are difficult to validate, since it is the only observational source used in the processing. The data obtained from the mathematical model, in fact, are not part of an observational source;
- given that the aim of the aforesaid method is to improve the weather forecasts and data on a hyper-local surface area (i.e. the area covered by the grid is limited solely to the extent of the farm), the method is configured to scale up very slowly and in a disaggregated manner, being directly tied to the location of the areas of interest. In other words, the method is configured to obtain almost point-by-point information, without being able to obtain information on what occurs between the points.

## Summary

In this context, the technical task at the basis of the present invention is to propose a process for producing a digital copy of the atmosphere relative to a given geographic domain on different space-time scales which overcomes the aforementioned drawbacks of the prior art.

In particular, one aim of the present invention is to propose a process for producing a digital copy of the atmosphere with which to build a weather and climate dataset capable of producing an official archive of weather data with high spatial resolution, which is complete in time and space and highly representative with reference to a specific geographic domain.

Another aim of the present invention is to provide a process for producing a digital copy of the atmosphere with which to build a weather and climate dataset capable of providing reliable weather data also in relation to areas of the geographic domain in which no weather stations are present. Therefore, specifically, the invention aims to provide accurate weather and climate data without there being a need to rely on the installation of new weather stations, which would result in a greater pressure on the environment, in addition to installation and maintenance costs.

A further aim of the present invention is to propose a process for producing a digital copy of the atmosphere with which it is possible to create a weather and climate dataset that provides, as output, coherent, robust data, and which can thus be used for technical purposes in sectors other than the strictly meteorological and scientific one.

The stated technical task and specified aims are substantially achieved by a process for producing a digital copy of the atmosphere relative to a given geographic domain on different space-time scales, which comprises the technical features disclosed in the independent claim. The dependent claims correspond to further advantageous aspects of the invention.

It should be observed that this summary introduces a selection of concepts in simplified form, which will be further elaborated on in the detailed description given below.

The invention relates to a process for producing a digital copy of the atmosphere relative to a given geographic domain on different space-time scales, comprising the steps of:

- acquiring - in order to produce a dataset of observational data through multisource integration - at least a first and a second dataset of weather measurements representative of different physical variables of a plurality of points of the geographic domain, such as temperature, precipitation, wind speed and direction, relative humidity, and incident solar radiation. The first dataset is recorded by in-situ weather stations, whereas the second dataset is recorded by remote weather sensors (e.g. radar and satellites);
- generating a first dataset of territorial metadata (so-called auxiliary co-variables) representative of specific morphological information of the geographic domain having an initial spatial resolution such as, for example, altimetric contour lines, land cover, exposure, and slope;
- applying to the first and second datasets of weather measurements and to the first dataset of territorial metadata an atmospheric simulation model configured to generate a modelled weather dataset with a pre-established spatial resolution. In particular, the modelled weather dataset is representative, for each simulated time instant, of the numerical values of the weather variables of the points of the geographic domain;
- generating a second dataset of territorial metadata representative of specific morphological information of the geographic domain having a final spatial resolution that is greater than the initial spatial resolution of the first dataset of territorial metadata;
- applying a statistical processing algorithm to the first and second datasets of weather measurements, to the modelled weather dataset and to the second dataset of territorial metadata;
- generating and recording a final weather and climate dataset on a regular grid of predefined dimensions, which is complete in time and space and representative of the geographic domain of reference, with said final spatial resolution, i.e. with a spatial resolution greater than that of any starting dataset. In detail, the final weather and climate dataset is representative, for each processed time instant, of the numerical values of the weather variables of the points of the geographic domain.

In other words, therefore, the aforesaid process is advantageously able to reconstruct a copy of the atmosphere, in relation to a given geographic domain on different space-time scales, and to reproduce it in a digital dataset discretized in a high-resolution grid (with a greater spatial resolution than any starting dataset) so as also to provide information content for every point of the aforesaid domain, irrespective of the presence, in that point, of a weather station from which it would be possible to obtain that content.

The process thus enables the development of a dataset relating to the past weather and climate pattern, both "near real-time" and historical, being able to go back to the first series of reliable, detailed, automatic instrumental observations (for example, from the 1980s). Even more advantageously, therefore, the process represents a fundamental tool for studying weather and climate variability and understanding climate mechanisms.

In detail, the aforesaid process is designed to first perform an integration of the observational data collected from various sources (in-situ, such as weather stations, or remote, such as radar and satellites) which generally do not show a homogeneous distribution for the entire territory of interest. Subsequently, the multisource integration is optimised with the complementary application of at least one predictive analytical mathematical model.

In addition, the aforesaid performance of the multisource integration before the application of statistical/generative mathematical models makes it possible to create a fixed, high-resolution target grid (i.e. containing the final output data) with broad territorial coverage. In other words, the target grid is advantageously capable of mapping a vast territorial surface area, wherein the various points of the grid itself are also able to provide information useful for the adjacent ones, thus improving the quality and robustness of the output data associated therewith.

In fact, in order to work on a national scale and at high resolutions (in the order of a kilometre), multisource integration of data obtained from the multiple on-site stations (for example, in Italy there are about 5,000-6,000 stations that provide data at hourly intervals) with other data obtained by remote sensing (for example from radars in the case of precipitations) is necessary. This, combined with the fact that there are certified official networks meeting WMO standards and thus already ensuring a high level of data quality and ample temporal depth, makes it possible to obtain grids of weather and climate data with a very great space-time homogeneity.

Advantageously, therefore, the multisource integration of the observational data of the process in accordance with the present invention is capable of rendering the output data obtained statistically solid and redundant. In other words, since a cross-validation can be performed, it is possible to increase the degree of quality of the output climate-related dataset, rendering it coherent in time and space.

The results obtainable thanks to application of this process are various and may be summed up here below in relation to the respective sectors of application:

- insurance: verification of threshold-crossing parameters for atmospheric events that are the subject of insurance coverage; "oracle" function for parametric or semi-parametric policies; computing of weather and climate danger indexes to support actuarial pricing processes; support to reinsurance activity; support to own risk and solvency assessment (ORSA).
- credit: support to financial rating analysis; support to portfolio solvency analysis;
- water and energy resource management: ex-post analysis and management of intense weather and climate events; support to the development of energy consumption/producibility models;
- infrastructure: ex-post analysis and management of intense weather and climate events; analysis of scenarios at 30-50 years for the planning of resilience activities and mitigation of climate change impacts;
- agriculture: crop choice; precision agriculture; active defence.
- real estate management: support to building design and/or rehabilitation based on current climate vulnerability indexes and scenarios at 30-50 years.

The present invention also relates a system for producing a digital copy of the atmosphere relative to a given geographic domain on different space-time scales, comprising a processing unit configured to:

- receive a first dataset of weather measurements from a plurality of weather stations located in said geographic domain, said first dataset of weather measurements being representative of at least one weather variable detected for a plurality of points distributed discretely and not uniformly in said geographic domain;
- receive a second dataset of weather measurements from a plurality of remote sensors associated with said geographic domain, said second dataset of weather measurements being representative of at least one weather variable detected for said plurality of points of said geographic domain;
- generate a first dataset of territorial metadata (auxiliary co-variables) representative of specific morphological information of the geographic domain having a predetermined initial spatial resolution;
- generate a modelled weather dataset with the application of an atmospheric simulation model to said first and second datasets of weather measurements and to said first dataset of territorial metadata, wherein each point of the geographic domain is representative of the aforesaid at least one weather variable detected for each time instant modelled in a pre-established time step;
- generate a second dataset of territorial metadata representative of specific morphological information of the geographic domain at a final spatial resolution that is greater than the initial spatial resolution;
- generate a final weather and climate dataset with the application of a statistical processing algorithm with an artificial neural network to said first and second datasets of weather measurements, to said second dataset of territorial metadata, and to said modelled weather dataset in order to produce the digital copy of the atmosphere of the geographic domain of reference on a representative regular grid, complete in time and space, which graphically represents it with a final resolution that is greater than the initial surface resolution relative to any starting weather dataset. In detail, the final weather and climate dataset is representative, for each time instant processed and for each point of the geographic domain, of the numerical values of the weather variables.

**Brief description of the drawings**

Additional features and advantages of the present invention will emerge more clearly from the approximate and thus non-limiting description of a preferred but not exclusive embodiment of a process for producing a digital copy of the atmosphere relative to a given geographic domain on different space-time scales, as illustrated in the appended drawings, in which:

- figure 1 illustrates a flow diagram representative of a possible embodiment of the invention;
- figure 2 illustrates an infographic representative of the process in accordance with the invention;

With reference to the drawings, they serve solely to illustrate embodiments of the invention with the aim of better clarifying, in combination with the description, the inventive principles at the basis of the invention.

## Detailed description of at least one embodiment

The present invention is aimed at a process for producing a digital copy of the atmosphere relative to a given geographic domain on different space-time scales. Any modifications or variants which, in the light of the description, should be evident to the person skilled in the art must be considered to fall within the scope of protection established by the present invention, according to considerations of technical equivalence.

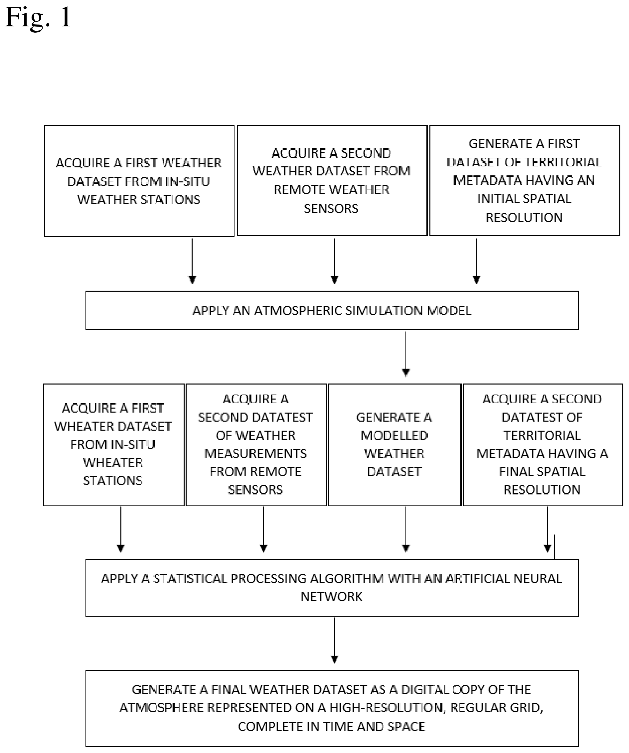

Figure 1 shows a flow diagram representative of a possible embodiment of the process for producing a digital copy of the atmosphere relative to a given geographic domain, for example the Italian territory or European territory.

In particular, the process is substantially made up of two components: a physical-modelling component and a statistical component.

The first component, the physical-modelling one, has the purpose of performing a first numerical simulation of the weather variables of interest based on real measurements performed on the territory of the geographic domain of interest.

However, the result of this first component does not have the qualitative characteristics necessary to be able to be profitably used within more complex decision-making processes, i.e. for the purposes mentioned previously, due to the intrinsic technical features of the aforesaid physical models.

In this regard, therefore, the second component, i.e. the statistical component, is advantageously capable of performing non-conventional statistical processing with which to obtain a result having a greater spatial resolution than the starting dataset in order to reconstruct the value of the weather variable of interest in any area of the geographic domain and in any time instant for which the corresponding initial values of the weather variable are available.

The weather variables of interest that may be detected by the weather stations better described below can be: temperature, precipitation, wind speed and direction, relative humidity, incident solar radiation and many others.

In detail, the physical-modelling component comprises a step of receiving a first dataset of weather measurements from a plurality of weather stations located in the aforesaid geographic domain, usually distributed non-uniformly, i.e. the "in-situ" weather stations physically present across the territory, and a second dataset of weather measurements from a plurality of remote sensors associated with the same geographic domain, i.e. non-conventional weather sensors such as radar and/or satellites.

The weather data used during the execution of the physical-modelling component must come from suitable monitoring networks so as to be able to produce exploitable, "robust" datasets. Therefore, the in-situ weather stations must be endowed with several specific characteristics, including that of being certified, of belonging, that is, to networks that have undergone formal certification procedures in relation to the type of instruments installed, the positioning of the measurement sites, and maintenance and data validation procedures. Alternatively, the in-situ weather stations must comply with the guidelines of the WMO (World Meteorological Organization), i.e. also applicable to associations, organisations and research institutes, nonprofits, and land management companies which apply the installation, management, maintenance and validation procedures defined in WMO guidelines. Or, finally, belong to official networks tied to government organisations and agencies legally responsible for weather and environmental monitoring.

The global observation system further comprises weather sensors that operate remotely, also defined as non-conventional, to which weather radars, geostationary and polar weather satellites, and lightning detectors belong.

The first and second datasets of weather measurements are representative of the measurement of at least one weather variable detected, respectively, by the in-situ weather stations and by the remote sensors for a plurality of points distributed discretely within the geographic domain of interest, usually non-uniformly.

The physical-modelling component further comprises a step of determining a first dataset of territorial metadata (also called auxiliary co-variables) representative of territorial information of the geographic domain, e.g. altimetric contour curves, the type of land cover (urban, agricultural, forest, water, etc.), exposure and slope, at the specific spatial resolution of the atmospheric simulation model.

In addition, the physical-modelling component comprises a step of generating a modelled weather dataset with the application of an atmospheric simulation model to the first and second datasets of weather measurements and, moreover, to the first dataset of territorial metadata. In this manner, therefore, each point of the geographic domain is representative of each weather variable detected for each time instant modelled in a pre-established time step.

In other words, for the execution of the physical-modelling component, the process envisages applying an atmospheric simulation model with which it is possible to model, by means of a numerical simulation, the temporal variation of each weather variable taken into consideration while also bringing about a redistribution, over all the points of the geographic domain, of the weather information contained in the first and second datasets of weather measurements. The modelling thus makes it possible to simulate the temporal pattern of each weather variable within a predetermined time step, but it cannot ensure sufficient quality and reliability with respect to the simulated data due to the very nature of the process. In fact, though the physical-modelling component is fundamental in order to distribute the non-uniformly discretized weather information contained in the first and second datasets of weather measurements consistently over all the points of the territory of the geographic domain, it generates biases due to the technical simplifications necessary for the effective numerical simulation of the complex physical processes which take place in the atmosphere.

Preferably, the atmospheric simulation model is of the WRF-ARW type.

Even more preferably, the atmospheric simulation model is coupled with a WRFDA system for assimilating observational data in the 3Dvar configuration in order to be able to assimilate the first and second datasets of weather measurements. In fact, the simulation model could be initialised and rendered operational simply by assimilating the data originating from other modelled datasets generated by other simulations on a larger scale (e.g. European or global models); however, this would mean introducing the biases from other simulations into the simulation. The direct assimilation of datasets of weather measurements via the WRFDA - 3Dvar system allows a good part of the aforesaid biases to be removed.

Moreover, notwithstanding compliance by the in-situ and non-conventional weather stations with the characteristic quality standards, it is advantageously useful to use an assimilation system in order to perform a further validation and quality control of the available data and, furthermore, to remove the biases of some sets of observations (e.g. overestimations and/or underestimations of the radar and satellite datasets), thereby allowing the modelling step to acquire solely the observations consistent with the actual state of the atmosphere.

In accordance with a preferred aspect of the invention, the steps of receiving the first and second datasets of weather measurements and the step of generating a modelled weather dataset are carried out a plurality of times a day.

Preferably, due to the different time frames with which the datasets are made available by the different weather stations, the physical-modelling component is executed four times a day by means of a completely automated procedure developed so as to download and pre-process the data necessary for the initialisation of the atmospheric simulation model and the execution of the subsequent statistical component.

In accordance with another aspect of the invention, the modelled weather dataset is a dataset in raster format, for example of the NetCDF type, having a resolution value preferably equal to 3.5 km for the Italian domain and 12 km per the European domain. The modelled weather dataset is advantageously capable of entering, for each cell and for each simulated time instant, all the numerical values of the main weather variables of interest previously detected

The second component, namely the statistical component, has the aim of performing a statistical postprocessing, with an artificial neural network, of the modelled weather dataset (which in itself, as mentioned earlier, is not sufficiently reliable and solid) in order to obtain a data grid having a spatial resolution that is greater than the initial resolution of any starting dataset.

In other words, the execution of the statistical component in cascade with the execution of the physical-modelling component makes it possible to represent, with a high degree of detail and precision, the historical series of weather and climate data in high-resolution digital grids, thereby producing, in fact, a digital copy of the atmosphere. The resulting dataset, i.e. the final weather and climate dataset, has the necessary characteristics in terms of quality and format in order to be integrated into all decision-making processes and activities that are impacted by weather and climate phenomena and the effects of climate change, such as, for example, in the areas of risk management, energy management, water resource management, agriculture, and infrastructure, and in the real estate sector.

In detail, the statistical component comprises a step of generating a second dataset of territorial metadata representative of specific morphological information of the geographic domain at a final spatial resolution that is greater than the aforesaid initial spatial resolution of the first dataset of territorial metadata. These auxiliary co-variables must in fact be associated with the previously mentioned datasets in order to be able to carry out a statistical reanalysis of the modelled weather data.

In addition, in fact, the statistical component comprises the step of generating a final weather and climate dataset with the application of a statistical processing algorithm with an artificial neural network to the first and second datasets of weather measurements, to the second dataset of territorial metadata and, finally, to the modelled weather dataset in order to obtain a spatial resolution that is greater than the initial one of the starting dataset.

For example, the execution of the statistical component advantageously makes it possible to increase the spatial resolution of the European domain from 12 km to 5 km, and from 3.5 km to 1 km in relation to the Italian domain. Therefore, the method in accordance with the present invention is capable of obtaining output data that can be fit into a high-resolution spatial context from a weather and climate standpoint.

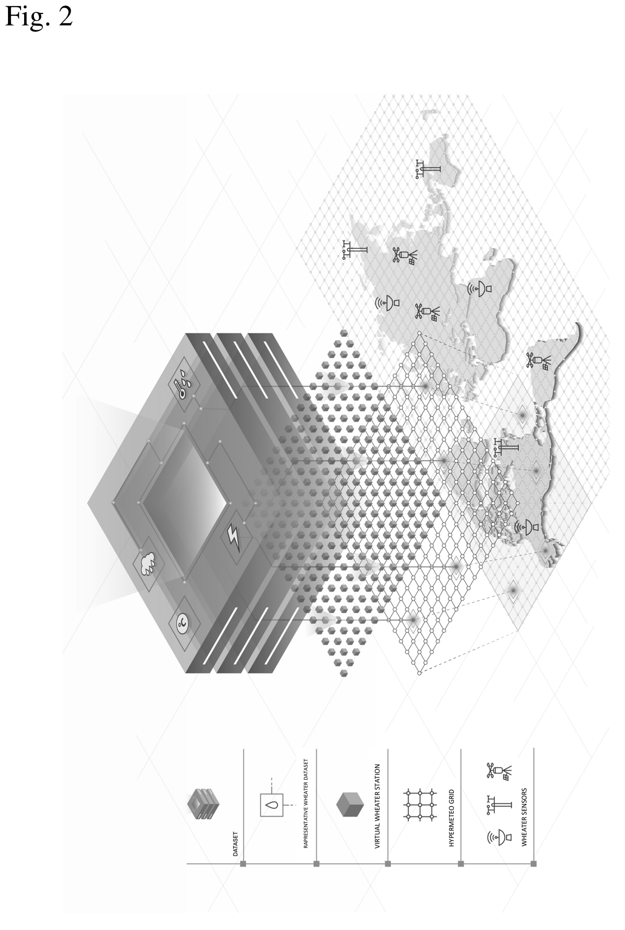

In particular, the statistical processing algorithm with an artificial neural network is configured to process each weather variable detected in further points of the geographic domain, in addition to the plurality of points relative to the input datasets, in order to simulate the presence of virtual weather stations in the geographic domain and thus increase the spatial resolution (Fig. 2). In addition, each point of the geographic domain is representative of each weather variable detected for each time instant processed in a pre-established time step.

The main advantage of the process described thus far is the assimilation of weather observations of varying nature (i.e. via in-situ weather stations and/or non-conventional/remote sensing) both into the initial physical-modelling component and in the subsequent statistical processing step performed by the artificial intelligence algorithm, so as to assure a high correlation between the processed datasets and physical observations.

The statistical component, i.e. the step of executing the processing algorithm with the neural network, is fundamental in order to obtain a final weather dataset of numerical values regarding the weather variables of interest which are reliable and consistent and thus applicable in the insurance, banking and water and energy management sectors. In fact, the modelled weather dataset (i.e. a dataset that is the product solely of a numerical simulation process in which the observations enter only in the initial step of the process by means of the data assimilation system) is not capable of producing results sufficiently close to reality such as to provide datasets which are useful as inputs to the complex decision-making processes typical of the industrial sectors mentioned above.

Preferably, the process in accordance with the invention is applied in order to process both hourly data and daily data for each geographic domain with the same update frequency. For example, the hourly data are processed every hour so as to always have the most up-to-date state of the atmosphere. Since the observations are not recorded and/or sent by the various weather stations of reference so as to be synchronised with the same time frames, the execution of the process in accordance with the invention and, in particular, the step of executing the atmospheric simulation model, is carried out several times within a 72-hour time window in order to process the largest possible number of observations.

In accordance with a preferred aspect of the invention, the step of generating a final weather dataset is carried out a number of times which is substantially equal to the number of detected weather variables represented in the first and second datasets of weather measurements and in the modelled weather dataset.

In other words, each weather variable is treated separately with a specific configuration of the statistical processing algorithm with a neural network in order to reach the maximum level of representativeness of the numerical values of the final weather dataset. For example, the numerical values relating to precipitations are calculated with the use of data collected mainly using radar and rain gauge data within the artificial intelligence algorithm. In contrast, the numerical values regarding temperature are calculated using the data recorded by temperature sensors and land cover and DEM information.

In accordance with one aspect of the invention, with the aim of optimising the quality of the final weather dataset, the statistical processing algorithm with a neural network is trained in order to set the numerical values representative of the weights to be associated with the various branches of connection between the neurons of the artificial intelligence network on which the aforesaid algorithm is based, preferably for each weather variable of interest.

Preferably, the training step exploits pairs of known input and output data in order to force the artificial neural network to reproduce an output data item from the input data. In this manner, once the training step is over, the statistical processing algorithm can be advantageously applied in the inference step, i.e. in the statistical component of the process in accordance with the invention, so as to produce, as output, the aforesaid final weather dataset which, in itself, is not known notwithstanding that the numerical input values present in the first and second datasets of weather measurements are known (because concretely detected by the weather stations).

In particular, the process also comprises a preliminary step of training said statistical processing algorithm with an artificial neural network using the first and second datasets of weather measurements and, moreover, the modelled weather dataset in which every point of the geographic domain is associated with the values of the weather variables of a plurality of points adjacent to it, preferably from 4 to 8 points, even more preferably 6.

For example, in accordance with a possible aspect of the invention, the neural network employed in the statistical component of the process in accordance with the invention has been trained on measurements of in-situ weather stations (about 6,000 stations) falling in the period 2018-2021, the consequent modelled weather datasets, based on the measurements of the remote sensors and, moreover, based on the territorial metadata. Once the artificial neural network has been calibrated, it is configured to exploit the data in selected inputs, known at any moment, so as reconstruct the value of the weather variable of interest in any area pertinent to the training (e.g. the Italian domain or European domain) and at any historical moment in which the values of the input variables are available.

An example of calculation of the hourly temperature is provided below in order to better analyse the statistical component of the process in accordance with the invention.

In detail, the description of the aforesaid example will regard two aspects: the training step and the inference step of the statistical processing algorithm with a neural network.

The training step has the purpose of creating a stable, high-performing, functioning artificial neural network.

In detail, the training step comprises the following sub-steps:

a) collection of temperature values from the weather stations of reference;
b) association with a modelling value;
c) association with the metadata;
d) association with the information of adjacent weather stations;
e) selection of the data for producing the weather dataset;
f) writing of the neural network;
g) training of the neural network;
h) comparison between a reference weather dataset and the results making up the final weather dataset obtained after the training.

Sub-step a) provides for extracting the hourly temperature values from the weather stations for the selected training period in order to create a table (preferably in CSV format) in which every row represents the hourly temperature value reported by a specific weather station, associated with the coordinates of the station itself, and an indication of the time of the measurement.

Sub-step b) provides for every value of the aforesaid table to be associated with the corresponding temperature value emerging from the modelling simulation it is intended to apply in the physical-modelling component of the process in accordance with the invention. This estimated value serves as a first estimation for the weather variable under consideration.

Sub-step c) provides for every value of the table to be associated with the metadata relative to the specific position of the weather station from which the initial parameter was drawn, i.e. the exposure or slope, the value of concavity characterising peaks or depressions, the land type (wooded or rural area, city, ...) and the elevation. Sub-step d) provides that, for every time instant considered, every value of the table is associated with the previously mentioned values (measured temperature, modelled temperature and metadata) of each of the stations closest to the station of reference, preferably the 6 closest stations. For the purpose of optimising the computing times, the Euclidean distance formula, empirically corrected to emulate the spherical distance calculated on the Earth's curved surface, is used to calculate the distance between weather stations. The distance "d" is represented by the following formula:

$$d = \sqrt{(\Delta_{lat} \times \alpha)^2 + (\Delta_{lon} \times \beta)^2}$$

where $\alpha$ and $\beta$, respectively, take on the values 1.112000 and 0.828500 which, for the purposes of this example, were obtained empirically by comparing the spherical distance and the Euclidean distance over a sample of points in Italian territory.

Sub-step e), with the aim of ensuring a training as free as possible of systematic errors, imposes the execution of a further selection of usable weather data based on the difference between the measured temperature values and the modelled temperature values. This procedure is useful for eliminating any outlier parameters deriving from malfunctions of the temperature measurement sensors.

Sub-step f), i.e. the writing of the statistical processing algorithm with an artificial neural network, is based on the use of Keras and TensorFlow libraries. The type of networks used belongs to the class of fully connected feed-forward neural networks. Generally, such systems share the number of input variables and the number of output variables, whilst they differ in their intrinsic features, such as the number of hidden layers, the activation functions of the individual artificial neurons, the number of internal artificial neurons, regularisation functions and other parameters. In particular, about a hundred variables are generally employed as initial values in order to incorporate the numerical values introduced in the previous sub-steps, while there is only one input variable, as it represents the sole real value, i.e. the temperature value measured by the respective sensor of the weather station of reference, i.e. the variable it is desired to reproduce. Sub-step g) is the actual step of training the statistical processing algorithm with an artificial neural network, wherein, preferably, it is carried out with error backpropagation algorithms. The purpose of the training sub-step is to make the processing algorithm reproduce the value measured by the weather station under consideration using solely the modelled numerical values and the associated metadata as input data. The training process follows the following mathematical reasoning, considering that the artificial neural network is made up of L layers:

- propagation: for every layer "l", the activation "$a^l$" is calculated as follows:

$$z^l = W^l a^{l-1} + b^l$$

$$a^l = f(z^l)$$

wherein $W^l$ is the matrix of weights of the l-th layer, $b^l$ is the bias vector, and $f$ is the activation function used (preferably ReLu);
- error calculation: once the output value has been obtained, the error relative to the target value (e.g. the temperature measured by the sensor) is calculated using a "loss function" to be minimised during the training process. For the purposes of this example, the loss function used is the hyperbolic cosine logarithmic function of the error;
- calculation of the gradient of the loss function relative to the weights and biases of the artificial neural network by means of error backpropagation algorithms:

$$\delta^L = \frac{\partial L}{\partial \hat{y}} \cdot f'(z^L)$$

$$\delta^l = (W^{l+1})^T \delta^{l+1} \cdot f'(z^l)$$

for *l = L-1, L-2, ..., 1*;

- updating of the values associated with the weights and biases

$$W^l \leftarrow W^l - \eta \cdot \frac{\partial L}{\partial W^l}$$

$$b^l \leftarrow b^l - \eta \cdot \frac{\partial L}{\partial b^l}$$

- iteration of the process until convergence and minimisation of the error function.

Sub-step h), finally, provides for a comparison of the final performances on a reference dataset, i.e. with a dataset representative of numerical values that were not used during the training step.

The inference step, usually carried out following the completion of the training step, makes it possible to obtain the final weather datasets with which it will be possible to create interactive maps (i.e. maps capable of showing the numerical values of the weather variables of interest instant by instant) of the geographic domains of interest In detail, the inference step comprises the following sub-steps:

a) preparing the geographic domain as a grid of points;
b) downloading the first and/or second datasets from the weather stations of reference for the time period of interest;
c) associating the modelling value and metadata with all the weather stations from which the datasets have been downloaded, for each point of the grid of the geographic domain;
d) associating the dataset of the weather stations closest to each point of the grid, similarly to what was previously described for the training step;
e) processing the aforesaid datasets via the statistical processing algorithm with an artificial neural network and creating, accordingly, the maximum temperature value for every point of grid.

In conclusion, the process in accordance with the present invention is advantageously capable of producing, as a result, high quality data (understood as a dataset, in particular a weather dataset representative of numerical values identifying specific weather variables) thanks to the use of diverse sources: observational sources already present in the geographic domain, such as in-situ weather stations and remote sensors (radar, satellites and lightning detection sensors). In addition, the process is also capable of resolving the drawbacks of the prior art - namely the poor spatial resolution and poor reliability of the data obtained as a result of a single step of simulation by means of mathematical models - in a digital and virtual manner without, therefore, relying on the installation of new real weather stations. In this manner, the process is advantageously capable of enormously reducing the environmental impact and the carbon footprint that would result from the possible installation of new physical monitoring systems and, at the same time, of achieving the same level of detail, quality and density of information as if the aforesaid new weather stations had actually been installed.

The previously described process, in fact, is capable of providing data on a high-resolution grid (for example, considering the Italian domain, in the order of 1 km) with a degree of precision comparable to that which would be provided by an in-situ weather station - if it existed. In other words, it is as if 300,000 "virtual" weather stations, represented by the cells of the grid used to reconstruct the reference dataset, were installed on Italian territory (about 300,000 $km^2$), whereas today the in-situ weather stations actually present number around 5,000 units, i.e. with a density 60 times lower than the density necessary to represent precise weather and climate phenomena, for example storms, on a $km^2$ scale.

In addition, the final weather datasets obtained thanks to the application of the process in accordance with the invention intrinsically have weather data that are complete in terms of time and space, unlike those that could be provided by a weather station because, for example, of possible interruptions of the measurements due to problems with the sensors.

**Claims**

1. A process for producing a digital copy of the atmosphere relative to a given geographic domain, comprising the steps of:

- building a dataset of observational data through a multisource integration of a first and a second weather dataset,

wherein said first weather dataset is obtained from a plurality of weather stations located in said geographic domain, said first weather dataset being representative of the measurement of at least one weather variable detected for a plurality of points distributed discretely in said geographic domain, and

wherein said second weather dataset is obtained from a plurality of remote sensors associated with said geographic domain, said second weather dataset being representative of at least one weather variable detected for said plurality of points of said geographic domain;

- generating a first dataset of territorial metadata representative of morphological information of the geographic domain having an initial spatial resolution;
- applying to said dataset of observational data and to said dataset of territorial metadata an atmospheric simulation model having said initial spatial resolution in order to generate a modelled weather dataset, wherein each point of said geographic domain is representative of said at least one weather variable detected for each time instant modelled in a pre-established time step;
- generating a second dataset of territorial metadata representative of morphological information of the geographic domain having a final spatial resolution that is greater than said initial spatial resolution;
- generating a final weather and climate dataset with the application of a statistical processing algorithm with an artificial neural network to said dataset of observational data, to said second dataset of territorial metadata and to said modelled weather dataset in order to obtain a digital copy of the atmosphere of the geographic domain of reference representable on a regular grid complete in time and space having said final spatial resolution that is greater than said initial spatial resolution.

2. The process according to claim 1, wherein said atmospheric simulation model is of the WRF-ARW type coupled with a WRFDA system for assimilating observational data in the 3Dvar configuration.

3. The process according to claim 1 or 2, wherein said steps of receiving the first and second datasets of weather measurements and said step of generating a modelled weather dataset are carried out a plurality of times a day, preferably four.

4. The process according to any one of the preceding claims, wherein said modelled weather dataset is a dataset in raster format.

5. The process according to any one of the preceding claims, wherein said step of generating a final weather dataset is carried out a number of times substantially equal to the number of weather variables detected and represented in said first and second datasets of weather measurements and in said modelled weather dataset.

6. The process according to any one of the preceding claims, also comprising a step of training said statistical processing algorithm with an artificial neural network by using said first and second datasets of weather measurements and said modelled weather dataset, wherein every point of the geographic domain is associated with the values of the weather variables of a plurality of points adjacent to it, preferably from 4 to 8 adjacent points.

7. The process according to claim 6, wherein said training step is carried out with error backpropagation algorithms.

8. The process according to any one of the preceding claims, wherein said step of receiving a second weather dataset from a plurality of remote sensors is obtained using weather and satellite radar.

9. A system for producing a digital copy of the atmosphere relative to a pre-established geographic domain, comprising a processing unit configured to:

- receive a first weather dataset from a plurality of weather stations located in said geographic domain, said first dataset of weather measurements being representative of at least one weather variable detected for a plurality of points distributed discretely in said geographic domain;
- receive a second weather dataset from a plurality of remote sensors associated with said geographic domain, said second dataset of weather measurements being representative of at least one weather variable detected for said plurality of points of said geographic domain;
- generate a dataset of observational data through a multisource integration of said first and said second weather datasets;
- generate a first dataset of territorial metadata (also defined auxiliary co-variables) representative of specific morphological information of the geographic domain having an initial spatial resolution;
- generate a modelled weather dataset with the application of an atmospheric simulation model to said first and second weather datasets and to said first dataset of territorial metadata, wherein each point of said geographic domain is representative of each weather variable detected for each time instant modelled in a pre-established time step;
- generate a second dataset of territorial metadata representative of specific morphological information of the geographic domain at the final spatial resolution;
- generate a final weather and climate dataset with the application of a statistical processing algorithm with an artificial neural network to said first and second datasets of weather measurements, to said second dataset of territorial metadata, and to said modelled weather dataset in order to obtain a digital copy of the atmosphere of the geographic domain of reference having a final spatial resolution that is greater than said initial spatial resolution, said final weather and climate dataset being representative, for each processed time instant, of the numerical values of the weather variables of the points of the geographic domain of reference.

# Fig. 1

```
┌──────────────────────┐  ┌──────────────────────┐  ┌──────────────────────┐
│ ACQUIRE A FIRST      │  │ ACQUIRE A SECOND     │  │ GENERATE A FIRST     │
│ WEATHER DATASET FROM │  │ WEATHER DATASET FROM │  │ DATASET OF TERRITORIAL│
│ IN-SITU WEATHER      │  │ REMOTE WEATHER       │  │ METADATA HAVING AN   │
│ STATIONS             │  │ SENSORS              │  │ INITIAL SPATIAL      │
│                      │  │                      │  │ RESOLUTION           │
└──────────────────────┘  └──────────────────────┘  └──────────────────────┘
```

APPLY AN ATMOSPHERIC SIMULATION MODEL

```
┌──────────────┐  ┌──────────────┐  ┌──────────────┐  ┌──────────────┐
│ ACQUIRE A    │  │ ACQUIRE A    │  │ GENERATE A   │  │ ACQUIRE A    │
│ FIRST        │  │ SECOND       │  │ MODELLED     │  │ SECOND       │
│ WHEATER      │  │ DATATEST OF  │  │ WEATHER      │  │ DATATEST OF  │
│ DATASET FROM │  │ WEATHER      │  │ DATASET      │  │ TERRITORIAL  │
│ IN-SITU      │  │ MEASUREMENTS │  │              │  │ METADATA     │
│ WHEATER      │  │ FROM REMOTE  │  │              │  │ HAVING A     │
│ STATIONS     │  │ SENSORS      │  │              │  │ FINAL SPATIAL│
│              │  │              │  │              │  │ RESOLUTION   │
└──────────────┘  └──────────────┘  └──────────────┘  └──────────────┘
```

APPLY A STATISTICAL PROCESSING ALGORITHM WITH AN ARTIFICIAL NEURAL NETWORK

GENERATE A FINAL WEATHER DATASET AS A DIGITAL COPY OF THE ATMOSPHERE REPRESENTED ON A HIGH-RESOLUTION, REGULAR GRID, COMPLETE IN TIME AND SPACE

Fig. 2

DATASET

RAPRESENTATIVE WHEATER DATASET

VIRTUAL WHEATER STATION

HYPERMETEO GRID

WHEATER SENSORS

Europäisches
Patentamt

European
Patent Office

Office européen
des brevets

# EUROPEAN SEARCH REPORT

**Application Number**

EP 25 20 1020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/223433 A1 (WAHABZADA MIRWAES [DE] ET AL) 22 July 2021 (2021-07-22) <br> * abstract * <br> * figures 1-3 * <br> * paragraphs [0083] - [0101] * <br> ----- | 1-9 | INV. <br> G01W1/10 |
| A | STREBEL DOMINIK ET AL: "Improved mesoscopic meteorological modeling of the urban climate for building physics applications", <br> JOURNAL OF BUILDING PHYSICS, <br> vol. 48, no. 3, 8 August 2024 (2024-08-08), pages 359-390, XP093365605, <br> ISSN: 1744-2591, DOI: <br> 10.1177/17442591241266553 <br> Retrieved from the Internet: <br> URL:https://journals.sagepub.com/doi/full-xml/10.1177/17442591241266553> <br> ----- | 1-9 | |
| A | CN 110 618 473 A (BEIJING BEIKE RONGZHI CLOUD COMPUTING TECH CO LTD) 27 December 2019 (2019-12-27) <br> * abstract * <br> * figures 1-4 * <br> * paragraphs [0031] - [0070] * <br> ----- | 1-9 | **TECHNICAL FIELDS SEARCHED (IPC)** <br><br> G06Q <br> G01W |

The present search report has been drawn up for all claims

| Place of search | Date of completion of the search | Examiner |
|---|---|---|
| The Hague | 12 February 2026 | Totò, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1020

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| US 2021223433 A1 | | 22-07-2021 | BR 112020023127 A2 | | 02-02-2021 |
| | | | CN 112585505 A | | 30-03-2021 |
| | | | EP 3794386 A1 | | 24-03-2021 |
| | | | US 2021223433 A1 | | 22-07-2021 |
| | | | WO 2019219664 A1 | | 21-11-2019 |
| CN 110618473 A | | 27-12-2019 | NONE | | |

EPO FORM P0459

For more details about this annex : see Official Journal of the European Patent Office, No. 12/82

## EP 4 726 439 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021223433 A